(19) Europäisches Patentamt
European Patent Office
Office européen des brevets

(11) Veröffentlichungsnummer: **0 156 214**
**B1**

(12) **EUROPÄISCHE PATENTSCHRIFT**

(45) Veröffentlichungstag der Patentschrift: **05.12.90**

(21) Anmeldenummer: **85102562.7**

(22) Anmeldetag: **07.03.85**

(51) Int. Cl.$^5$: **C 09 B 11/26,** B 41 M 5/26, B 41 M 5/124, C 07 D 471/04, C 07 D 487/04

# (54) Imidazo 1,5-ar pyridyl-methan- und Imidazo 1,5-br pyridazinyl-methan-Derivate, ihre Herstellung und sie enthaltende Aufzeichnungsmaterialien.

(30) Priorität: **15.03.84 DE 3409440**

(43) Veröffentlichungstag der Anmeldung:
**02.10.85 Patentblatt 85/40**

(45) Bekanntmachung des Hinweises auf die Patenterteilung:
**05.12.90 Patentblatt 90/49**

(84) Benannte Vertragsstaaten:
**CH DE GB LI**

(56) Entgegenhaltungen:
**DE-A-2 263 815**
**FR-A-2 298 442**
**FR-A-2 369 098**

(73) Patentinhaber: **BAYER AG**
**D-5090 Leverkusen 1 Bayerwerk (DE)**

(72) Erfinder: **Runzheimer, Hans-Volker, Dr.**
**c/o Miles Laboratories, Inc 1127 Myrtle Street**
**Elkhart Indiana 46514 (US)**
Erfinder: **Nehen, Ulrich, Dr.**
**Rückertstrasse 10**
**D-5090 Leverkusen 1 (DE)**
Erfinder: **Jabs, Gert, Dr.**
**Wingensiefer Kamp 25**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 156 214 B1

**Beschreibung**

Gegenstand der Erfindung sind Hetarylmethan-Leukofarbstoffe der Formel

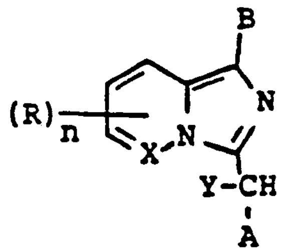

(I)

worin

R Halogen, Alkyl, Alkoxy, Aryl oder Aryloxy,

A einen aromatischen-carbocyclischen oder -heterocyclischen Rest,

B Wasserstoff, Halogen, Alkyl, Aryl, Alkylcarbonyl, Arylcarbonyl, Amino, Mono- oder Dialkylamino, Arylamino, Aralkylamino oder Acylamino,

X CH oder N,

Y 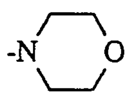 , 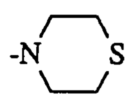 , 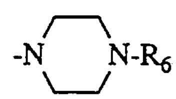 oder 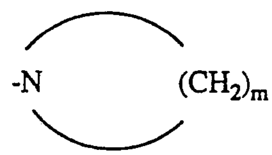

$R_6$ Wasserstoff oder Alkyl,

m 4—6 und

n 0,1—4 bedeuten und

worin die cyclischen und acyclischen Reste ihrerseits durch Halogen, Hydroxy, Alkoxy, Aryloxy, Aralkoxy, Hetaryloxy, Aryl, Heteraryl, Alkylmercapto, Arylmercapto, Aralkylmercapto, Cyano, Carbamoyl, Alkoxycarbonyl, Amino, das durch 1- oder 2-Alkyl-, Aryl- oder Aralkylgruppen substituiert sein kann, oder dessen Substituenten ringgeschlossen sein können, Alkenyloxy, Alkylcarbonyloxy oder Arylcarbonyloxy und die Ringe außerdem durch Alkyl, Aralkyl, Nitro, Alkenyl oder Arylvinyl substituiert sein können, ihre Herstellung und sie enthaltende druckkopierfähige und thermoreaktive Aufzeichnungsmaterialien.

Die erfindungsgemäß zu verwendenden Di-(het)arylmethanfarbstoffe unterscheiden sich von den für den gleichen Zweck vorgeschlagenen Tri-(het)arylmethanfarbstoffen dadurch, daß sie anstelle des dritten aromatischen Kerns einen über N-verknüpften Heterocyclus als Substituenten enthalten.

In Formel I stehen bevorzugt Alkyl für $C_1$—$C_8$-Alkyl, insbesondere für $C_1$—$C_5$-Alkyl, und Alkenyl für $C_2$—$C_5$-Alkenyl.

Halogen steht steht vorzugsweise für Fluor, Chlor oder Brom.

Unter Aryl wird insbesondere Phenyl und Naphthyl, unter Aralkyl Benzyl und Phenylethyl sowie deren durch nichtionische Reste substituierten Abkömmlinge verstanden.

Bevorzugtes Acyl ist Acetyl, Propionyl und Benzoyl.

Bevorzugte Heterarylreste sind Benzofuranyl, Benzoxazolyl, Pyrazolinyl und Pyridyl.

Bei den aromatischen Resten A kann es sich um monocyclische Ringe oder um anellierte Ringsysteme handeln, von denen 2 miteinander direkt oder über eine Brücke verknüpft sein können. Als anellierte Ringe kommen aromatische und gesättigte carbocyclische und heterocyclische 5- und 6-gliedrige Ringe infrage.

Geeignete aromatisch carbocyclische Reste A gehören z.B. der Benzol-, Naphthalin-, Pyren-, Anthrazen-, Perylen- und Biphenyl-Reihe an.

Geeignete heteroaromatische Ringe A sind beispielsweise der Thiophen-, Pyrrol-, Imidazol-, Oxazol-, Thiazol-, Pyrazol-, Pyridin- und Pyrimidin-Ring.

Als anelierte carbocyclisch-heterocyclische Ringsysteme sind z.B. Chinolin-, 1,2,3,4-Tetrahydrochinolin, Chinoxalin, Indol, 1,2-Dihydroindol, Benzofuran, Benzoxazol und Benzdioxol von Interesse.

Die genannten Ringe können durch die vorstehend aufgeführten nichtionischen Reste substituiert sein.

Bevorzugte Verbindungen der Formel (I) sind die der Formel

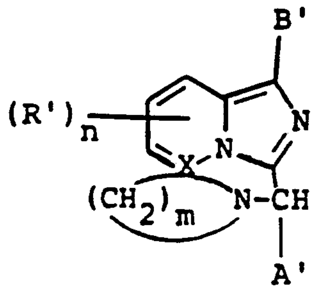

(II)

worin

R' Halogen, $C_1$—$C_5$-Alkyl oder $C_1$—$C_5$-Alkoxy,

A' Phenyl, Naphthyl, Pyrenyl, Anthracyl, Perylenyl, Biphenylyl, Thienyl, Pyrryl, Imidazolyl, Oxazolyl, Thiazolyl, Pyrazolyl, Pyridyl, Pyrimidyl, Chinolyl, 1,2,3,4-Tetrahydrochinolyl, Chinoxalyl, Indolyl, 1,2-Dihydrochinolyl oder Benzdioxolyl und

B' Wasserstoff, Halogen, $C_1$—$C_5$-Alkyl, Phenyl, $C_1$—$C_4$-Alkylcarbonyl, Benzoyl, Mono- oder Di-$C_1$—$C_5$-Alkylamino oder Phenylamino bedeuten, die Alkylreste und die cyclischen Reste durch Fluor, Chlor, Brom, Hydroxy, $C_1$—$C_8$-Alkoxy, Phenoxy, Benzyloxy, Pyridyloxy, Phenyl, Pyrazolinyl, Benzoxazolyl, Benzofuranyl, Triazolyl, $C_1$—$C_4$-Alkyl-, Phenyl- oder Benzylmercapto, Cyan, Carbamoyl, $C_1$—$C_4$-Alkoxycarbonyl, Amino, das seinerseits durch 1 oder 2 $C_1$—$C_4$-Alkyl-, Phenyl-, Benzyl- oder Phenethyl-Gruppen substituiert sein kann, $C_2$—$C_4$-Alkenyloxy, $C_1$—$C_4$-Alkylcarbonyloxy oder Benzoyloxy substituiert sein können, und die cyclischen Reste außerdem durch Nitro, $C_1$—$C_4$-Alkyl, Benzyl, $C_2$—$C_6$-Alkenyl oder Styryl substituiert sein können, und m und n die oben angegebene Bedeutung haben.

Von den unter A' genannten Heterocyclen seien besonders genannt:

Thienyl(2) und -(3), Pyrryl(2), Imidazolyl(4), Isoxazolyl(3) und -(5), Thiazolyl(2), -(4) und -(5), Pyrazolyl(4), Pyridyl(2), -(3) und (4), Pyrimidyl(2) und -(4).

Von den Verbindungen der Formel (II) sind diejenigen mit B' = $CH_3$ und m = 5 und von diesen wiederum diejenigen mit X = CH und n = 0 oder 1 hervorzuheben.

Besonders bevorzugte Verbindungen entsprechen der Formel

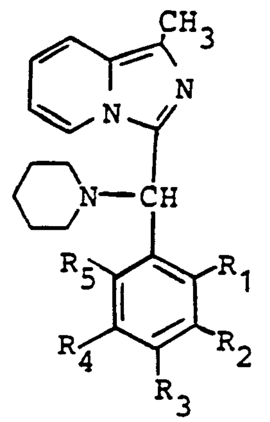

(III)

worin

$R_1$ und $R_5$ für Wasserstoff, $C_1$—$C_4$-Alkyl, Phenyl, Benzyl, $C_1$—$C_4$-Alkoxy, $C_2$—$C_4$-Alkenyloxy, Phenoxy, $C_1$—$C_4$-Alkylcarbonyl, Benzoyl, Chlor oder Brom,

$R_2$ und $R_4$ für Wasserstoff, $C_1$—$C_4$-Alkyl, Phenyl, Benzyl, $C_1$—$C_4$-Alkoxy, Phenoxy, Chlor, Brom, Amino, das durch 1 oder 2 $C_1$—$C_4$-Alkyl-, Phenyl-, Benzyl- oder Phenethyl-Gruppen substituiert sein kann.

$R_3$ für Wasserstoff, $C_1$—$C_4$-Alkyl, Phenyl, Benzyl $C_1$—$C_8$-Alkoxy, Phenoxy, Pyridyloxy, Benzyloxy, Phenyl-, Chlorphenyl- oder Biphenylyl-pyrazolinyl, Benzoxazolyl, Benzofuranyl, 1,2,3-Triazolyl, Phenylvinyl, Cyan, Chlor, Brom, $C_1$—$C_4$-Alkoxycarbonyl, $C_1$—$C_4$-Alkoxy- oder Phenoxycarbonyl-$C_1$—$C_4$-alkoxy, Nitro, Amino, das durch 1 oder 2 $C_1$—$C_4$-Alkyl-, Phenyl-, Benzyl- oder Phenethylgruppen substituiert sein kann, wobei die Reste am Stickstoff ihrerseits durch Chlor, Cyan oder Phenyl substituiert sein können, für $C_1$—$C_4$-Alkyl- oder Phenyl-mercapto, oder

$R^1$ und $R^2$ zusammen mit dem Benzolring an den sie gebunden sind, für Naphthyl oder Anthracyl, oder

$R_1$, $R_2$, $R_4$ und $R_5$ zusammen mit dem Benzolring, an den sie gebunden sind für gegebenenfalls durch Chlor substituiertes Anthracyl, oder

$R_1$, $R_2$ und $R_3$ zusammen mit dem Benzolring, an den sie gebunden sind, für Pyrenyl, oder

$R_2$ und $R_3$ zusammen mit dem Benzolring, an den sie gebunden sind, für Benzdioxol stehen.

Ganz besonders bevorzugte Farbbildner entsprechen der Formel

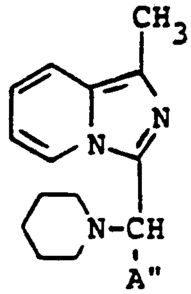

(IV)

worin

A'' für die Reste

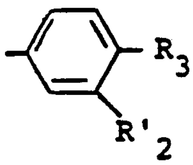 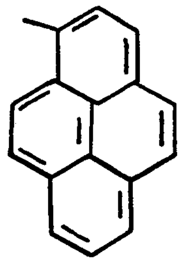 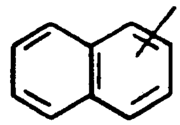 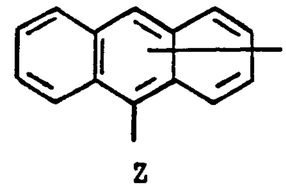

oder 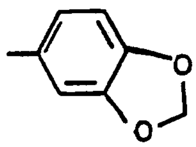

$R'_2$ für Wasserstoff, Methoxy, Ethoxy, Methyl oder Ethyl und

Z für Wasserstoff oder Chlor stehen, und

$R_3$ die bei Formel (III) angegebene Bedeutung hat.

Die Herstellung der Verbindungen der Formel (I) erfolgt durch Reaktion von Imidazo[1,5-a]pyridin- oder Imidazo[1,5-b]pyridazinyl-Verbindungen der Formel

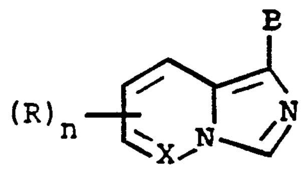
(V)

oder

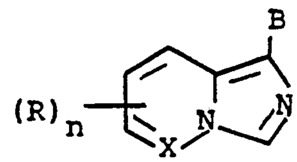 . 2 HCl
(VI)

worin

X, R, n und B die oben angegebene Bedeutung haben, mit Aldehyden der Formel

$$O{=}CH{-}A \qquad (VII)$$

und Basen der Formel

$$YH \qquad (VIII)$$

wobei A und Y die zuvor genannte Bedeutung besitzen.

Die Umsetzung kann ohne Lösungsmittel durch Aufschmelzen der 3 Komponenten im Temperaturbereich von 60—180°C, vorzugsweise bei 100°C in Anwesenheit eines sauren Kondensationsmittels erfolgen oder zweckmäßiger in einem organischen Lösungsmittel bei Rückflußtemperatur. Die Umsetzung wird vorzugsweise in Anwesenheit eines sauren Kondensationsmittels wie z.B. niedere aliphatische Carbonsäuren, wie Ameisensäure oder Essigsäure, oder anorganische Säuren, wie z.B. Salzsäure, Schwefelsäure, Phosphorsäure oder Perchlorsäure durchgeführt. Die sauren Kondensationsmittel werden vorzugsweise in Verbindung mit Pyrrolidin oder Piperidin eingesetzt.

Als Lösungsmittel dienen beispielsweise cycloaliphatische oder aromatische Kohlenwasserstoffe wie Cyclohexan, Benzol, Toluol oder Xylol; Chlorkohlenwasserstoffe, wie Chloroform, Ethylenchlorid oder Chlorbenzole; Ether, wie Diethylether oder Glykoldimethylether; cyclische Ether, wie Dioxan oder Tetrahydrofuran; niedere aliphatische Alkohole, wie Methanol, Ethanol oder Isopropanol, Alkylenglykolmonoalkylether wie Ethylenglykolmonomethylether oder -ethylether, Dimethylformamid, Diethylformamid, Dimethylsulfoxid, N-Methylpyrrolidon, Tetramethylensulfon oder Acetonitril.

Die Verbindungen der Formeln (V) und (VI) können nach literaturbekannten Verfahren hergestellt werden, z.B. aus 2-Acetylpyridin durch Umsetzung mit Hydroxylamin, Reduktion des erhaltenen Oxim-Isomerengemisches zum 1-(2-Pyridyl)-1-aminoethan-Isomerengemisch (vgl. JACS *68*, 2400 (1946). Dieses Isomerengemisch kann beispielsweise formyliert und mittels Säurehalogeniden oder Säuren zum Heterocyclus der Formeln (V) bzw. (VI) umgesetzt werden, wobei dann $B{=}CH_3$ ist (vgl. J. Chem. Soc. *1955*, 2834; Diss. Abstr. B *1968*, 547).

Die eingesetzten Aldehyde der Formel (VII) sind literaturbekannt und wurden nach literaturbekannten Verfahren hergestellt (vgl. z.B. J. Org. Chem. *30*, 3714 (1965), DE—B 1 060 375, US—A—2 558 285).

Die Farbbildner der Formeln (I) bis (IV) sind, sofern sie kristallin anfallen, normalerweise farblos oder schwach gefärbt. Werden diese Verbindungen mit einem vorzugsweise sauren Entwickler, z.B. einem

Elektronenakzeptor, in Kontakt gebracht, so ergeben sie je nach Bedeutung von A in Formel (I) intensive gelbe, orange, rote, violette, blaue und grüne Farbtöne, die eine hohe Sublimations- und Lichtechtheit besitzen. Sie sind auch besonders wertvoll im Gemisch mit anderen bekannten Farbbildnern, z.B. mit 3,3-(Bis-aminophenyl)-phthaliden, 3,3-(Bis-indolyl)-phthaliden, 3-Aminofluoranen, 2,6-Diaminofluoranen, Leukoauraminen, Spiropyranen, Spirodipyranen, Chromenoindolen, Phenoxazinen, Phenothiazinen, Carbazolylmethanen oder anderen Triarylmethanleukofarbstoffen, um blaue, marineblaue, graue oder schwarze Färbungen zu ergeben.

Als Entwickler oder Nehmer kommen anorganische Verbindungen wie saure Tone, aktivierte Tone, Attapulgit, Bentonit, Montmorillonit, Zeolith, Aluminiumoxid, Silton Clay, Silicagel, Aluminium- oder Zinksalze und organische Produkte wie mehrwertige Metallsalze von aromatischen Carbonsäuren und -estern, insbesondere Zinksalicylate oder Maleinsäureharze, Formaldehydharze, Phenolpolymere, insbesondere p-substituierte Phenole umgesetzt mit Formaldehyd, die gegebenenfalls Zink enthalten, in Frage.

Die Farbbildner oder -geber der Formeln (I) bis (IV) lassen sich für druck- und wärmeempfindliche Aufzeichnungsmaterialien, besonders für Reaktionsdurchschreibepapiere verwenden.

Reaktionsdurchschreibepapiere sind bekannt (vgl. M. Gutcho, Capsule Technology and Microencapsulation, Noyes Data Corporation, 1972, Seiten 242—277; G. Baxter, Microencapsulation, Processes and Applications, herausgegeben von J. E. Vandegaer, Plenum Press, New York, London, Seiten 127—143).

Die Farbbildner werden vorzugsweise in Mikrokapseln eingelagert, in denen sie in gelöster Form vorliegen.

Reaktionsdurchschreibepapiere bestehen vorzugsweise aus zwei oder mehreren lose aufeinandergelegten Papierblättern, wobei das jeweils obere auf der Rückseite eine Geberschicht und das jeweils untere auf der Vorderseite eine Nehmerschicht enthält. Die Geberschicht enthält die Mikrokapseln, deren Kernmaterial eine Lösung des Farbbildners in einem organischen Lösungsmittel ist. Die Nehmerschicht enthält den Entwickler. Beim Beschreiben werden die Kapseln unter dem hohen Druck des Schreibgerätes zerstört und das auslaufende Kernmaterial trifft auf die Nehmerschicht, so daß eine Durchschrift entsteht. Die Nehmerschicht enthält außerdem in der Regel Bindemittel und Pigmente, z.B. Titandioxid, Kreide, Talkum, Zinkoxid.

Eine andere Anordnung der Komponenten besteht darin, daß sich die Farbgeberkapseln und die Entwickler auf der Oberfläche in einer oder mehreren Einzelschichten befinden oder in der Papiermasse eingearbeitet sind.

Herstellung von Mikrokapseln für Reaktionsdurchschreibepapiere wird z.B. in US—A—2 800 457, DE—B—1 122 495, DE—B—2 529 427, 2 757 528, 2 757 634 und 2 832 637, US—A—3 016 308, CA—A—742 643, US—A—3 575 882, 3 577 515 und 3 607 776 und DE—A—2 311 712, 2 655 048 und 2 738 509 beschrieben.

Die Farbbildner der Formeln (I)—(IV) werden vorzugsweise in Lösungsmitteln gelöst und ihre Lösungen anschließend mikroverkapselt. Geeignete Lösungsmittel sind z.B. Petroleum, Kerosin, Xylol, Toluol und ähnliche Mineralöle sowie hydriertes und teilweise hydriertes Terphenyl, Alkylnaphthaline, alkylierte Diphenylalkane, alkylierte Triphenylethane, alkyliertes Diphenyl und ähnliche aromatische Kohlenwasserstoffe, Diisopropylbenzol, polyhalogeniertes Paraffin oder Diphenyl, wie Chlorparaffin, Monochlordiphenyl oder Trichlordiphenyl, außerdem Tricresylphosphat, Trichlorethylphosphat, Trichlorbenzol, Benzylphenylether, Di-n-butylphthalat, Dioctylphthalat, Diphenylether, Diarylalkane, pflanzliche oder tierische Öle.

Weiterhin eignen sich als Lösungsmittel und/oder Verschnittmittel z.B. Paraffine, Alkylbenzole, z.B. Dodecylbenzol, oder Olefine.

Setzt man zur Herstellung der Mikrokapseln Polyisocyanate ein, kann man zunächst das Diisocyanat und die Farbstoffvorstufe in Lösungsmitteln lösen und diese organische Phase in einer wäßrigen, die gegebenenfalls auch Schutzkolloide enthalten kann, emulgieren. Zu dieser Emulsion gibt man dann die wäßrige Polyaminlösung in stöchiometrischer Menge.

Zur Emulgierung und Stabilisierung der gebildeten Emulsion werden der wäßrigen Phase Schutzkolloide und Emulgierhilfsmittel zugesetzt.

Beispiele für solche als Schutzkolloide wirkende Produkte sind Carboxymethylcellulose, Gelatine und Polyvinylalkohol.

Beispiele für Emulgatoren sind oxyethyliertes 3-Benzylhydroxybiphenyl, Umsetzungsprodukte von Nonylphenol mit unterschiedlichen Mengen Ethylenoxid und Sorbitanfettsäureester.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-Schnellrührer, Kolloidmühle, Homogenisatoren, Ultraschalldispergatoren, Düsen, Strahldüsen, Supratonmaschinen. Die Stärke der Turbulenz beim Vermischen ist in erster Linie bestimmend für den Durchmesser der erhaltenen Mikrokapseln. Kapseln in der Größe von 1 bis 2 000 µm können hergestellt werden. Bevorzugt sind Kapseln mit Durchmessern von 2 bis 20 µm. Die Kapseln agglomerieren nicht und haben ein enge Teilchengrößenverteilung. Das Gewichtsverhältnis von Kernmaterial zu Hülsenmaterial ist 50—90 zu 50—10.

Die primär erhaltenen Mikrokapselsuspensionen enthalten im allgemeinen 10 bis 45 Gew.-% Kapseln.

Die homogenisierten, mit Binder und gegebenenfalls inerten Füllstoffen, wie Talkum oder Kaolin, versehenen Kapselsuspensionen können in Auftragsmengen von 4—8 g/m$^2$ auf Rohpapier aufgetragen werden. Die Beschichtung von Rohpapier ist beschrieben in DE—A 1 934 457 und 1 955 542.

Die Kapseln werden bevorzugt mit geeigneten Bindern auf dem Träger befestigt. Ist Papier das bevorzugte Trägermaterial, benutzt man als Binder hauptsächlich Papierbeschichtungsmittel, wie Stärke oder Stärkederivate, Methylcellulose, Hydroxymethylcellulose, Dextrin, Gummiarabicum, Casein oder Polymerlatices wie z.B. Butadien-Styrolcopolymerisate oder Acrylhomo- oder -copolymere.

Als Papier werden nicht nur normale Papiere aus Cellulosefasern verwendet, sondern auch Papiere, in denen die Cellulosefasern durch Fasern aus synthetischen Polymerisaten teilweise oder vollständig ersetzt sind.

Die erfindungsgemäßen Farbbildner der Formeln (I)—(IV) können auch für die Herstellung von wärmeempfindlichen Aufzeichnungsmedien eingesetzt werden, die z.B. in den US-Patentschriften 2 172 507, 2 730 457, 3 539 375, 4 309 047 und 4 316 621 beschrieben werden.

Ihre Herstellung erfolgt dadurch, daß die Farbbildner, ein oder mehrere als Elektronenakzeptor dienende Nehmer und ein Bindemittel gemeinsam oder einzeln in Form einer Beschichtungsmasse in einer oder mehreren Schichten auf einen Träger aus Papier, einer Kunststoff-Folie, textilem Gewebe, synthetischem Papier, Metall oder Glas aufgebracht werden.

Die wärmeempfindlichen Aufzeichungsmedien werden eingesetzt in Fernschreibern, Rechnern, Druckern, Meßinstrumenten oder anderen Aufzeichnungsgeräten. In neueren Geräten kann die Wärmeerzeugung auch mit Hilfe von Laserstrahlen erfolgen.

Beim Einwirken von Wärme können durch Erweichen oder Schmelzen der einzelnen Komponenten der Farbbildner und der Nehmer miteinander unter Erzeugung von Farbe reagieren.

Als Entwickler benutzt man die gleichen Elektronenakzeptoren, wie sie in druckempfindlichen Papieren eingesetzt werden. Beispiele für Entwickler sind Tonminerale und Phenolharze, oder auch phenolische Verbindungen, die beispielsweise in der DE—A—3 219 239 beschrieben sind.

Als Bindemittel werden bevorzugt wasserlösliche oder -quellbare filmbildende und schmelzbare Produkte eingesetzt, z.B. Methylcellulose, Carboxymethylcellulose, Hydroxyethylcellulose, Gelatine, Stärke oder Stärkederivate, Polyvinylalkohol, Polyacrylamid, Polyvinylpyrrolidon oder Polyacrylsäure.

Wenn der Farbbildner und der Entwickler in zwei getrennten Schichten vorliegen, können Bindemittel, die nicht-polaren oder nur schwach polaren Lösungsmitteln löslich sind, benutzt werden, wie Naturkautschuk, synthetischer Kautschuk, chlorierter Kautschuk, Alkydharze, Polystyrol, Styrol/Butadien-Mischpolymerisate, Polymethylacrylate, Ethylcellulose, Nitrocellulose und Polyvinylcarbazol.

Die wärmeempfindlichen Schichten können außerdem Zusätze enthalten, wie anorganische oder organische Pigmente z.B. Talk, Titandioxid, Zinkoxid, Calciumcarbonat, Tone oder auch organische Pigmente, z.B. Harnstoff-Formaldehydpolymerisate, wodurch der Weißgrad und die Bedruckbarkeit der Papiere verbessert werden.

Andere schmelzbare Zusätze, wie Carbonsäureamid- oder Harnstoffderivate, Phthalsäureanhydrid, Metallstearate oder natürliche oder synthetische Wachse sorgen dafür, daß nur innerhalb scharf begrenzter Bereiche eine Farbentwicklung erfolgt bzw. Farbbildner und Nehmer möglichst gleichzeitig und bei erniedrigter Temperatur schmelzen.

Die erfindungsgemäßen Farbbildner der Formeln (I)—(IV) können außerdem für die Herstellung von elektrothermischen oder elektrostatischen oder lichtempfindlichen Aufzeichnungsmedien verwendet werden.

Den in den folgenden Beispielen angegeben "sauren Entwicklungston" erhält man — soweit nicht anders angegeben — in der Weise, daß man eine Lösung des Farbbildners in Toluol auf ein Papier aufträgt und durch Zugabe von Essigsäure entwickelt.

### Beispiel 1

10,3 g (50 mmol) 1-Methylimidazo[1,5-a]pyridin-dihydrochlorid und
11,5 g (50 mmol) 1-Formylpyren werden zusammen mit
9,4 g (110 mmol) Piperidin und
0,3 ml Eisessig bei 100°C 4 bis 5 Stunden lang innig verrührt. Das Reaktionsgemisch wird in
100 ml warmen Toluol aufgenommen und durch Ausschütteln mit Wasser der pH-Wert auf 8 abgesenkt. Man trocknet die organische Phase über $MgSO_4$, filtriert und zieht das Lösungsmittel ab. Der Rückstand wird aus Toluol umkristallisiert. Man erhält 10,6 schwach gelb gefärbtes Pulver mit einem Schmelzpunkt von 191—192°C, das folgender Formel entspricht:

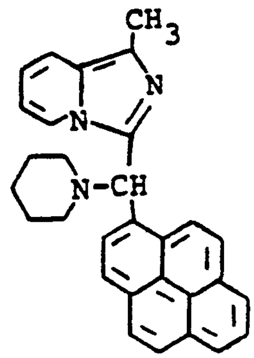

Der Entwicklungston dieses Farbbildners im sauren Bereich ist violett. (Schmelzpunkt: 191—192°C)

Nach dieser Vorschrift können in analoger Weise, gegebenenfalls durch verlängerte Reaktionszeiten bei 100°C, die folgenden Verbindungen hergestellt werden:

Beispiel 2

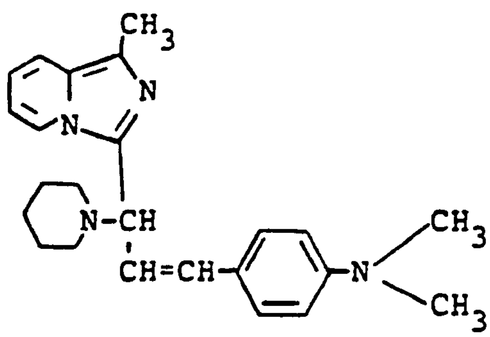

Saurer Entwicklungston: blaugrün

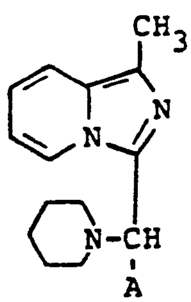

| Beispiel | A | Saurer Entwicklungs-ton |
|---|---|---|
| 3 | 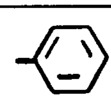 | gelb |
| 4 | 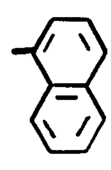 | gelb |
| 5 | 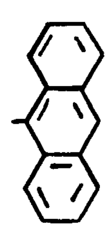 | gelb |

| Beispiel | A | Saurer Entwicklungs-ton |
|---|---|---|
| 6 | 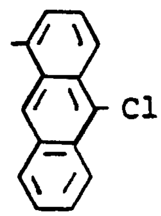 | orange |
| 7 | 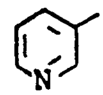 | gelb |
| 8 | 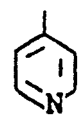 | gelb |
| 9 | 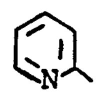 | gelb |
| 10 | 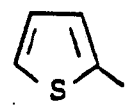 | orange |
| 11 | 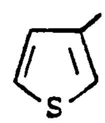 | orange |

Die Farbbildner der Beispiele 1 bis 11 können auch nach dem Verfahren von Beispiel 12 erhalten werden:

Beispiel 12

10,3 g (50 mmol) 1-Methylimidazo[1,5-a]pyridin-dihydrochlorid,
7,5 g (50 mmol) 4-Ethoxybenzaldehyd,
9,4 g (110 mmol) Piperidin und
0,3 ml Eisessig werden in
100 ml Toluol 20 Stunden bei Rückflußtemperatur gut verrührt. Man läßt abkühlen und schüttelt mit Wasser aus, bis der pH-Wert auf 8 abgesunken ist. Die organische Phase wird über $MgSO_4$ getrocknet, filtriert und einrotiert. Nach Trocknung im Hochvakuum wird der ölige Rückstand durch Zugabe von Aceton zur Kristallisation gebracht. Es werden 8,6 g eines grauweißen kristallinen Pulvers vom Schmelzpunkt 119—120°C erhalten, dem nach NMR- und massenspektroskopischer Analyse folgende Struktur zukommt:

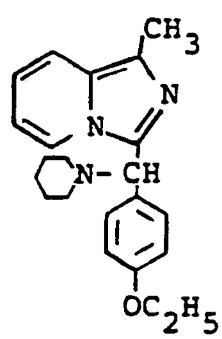

Dieser Farbbildner entwickelt sauer zu einem Orange. (Schmelzpunkt: 114—115°C)

Nach Beispiel 12 können in analoger Weise, gegebenenfalls durch verlängerte Reaktionszeiten bis zu 50 Stunden, die Farbbildner (a) und (b) hergestellt werden:

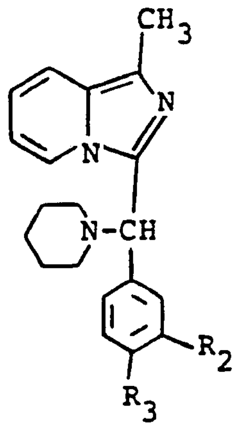

(a)

| Beispiel | $R_3$ | $R_2$ | saurer Entwicklungston |
|---|---|---|---|
| 13 | $-OCH_3$ | -H | orange |
| 14 | $-O-nC_8H_{17}$ | -H | orange |
| 15 | $-O-i-C_3H_7$ | -H | orangerot |
| 16 | $-OCH_2-$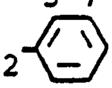 | -H | orange |
| 17 | $-OCH_2-$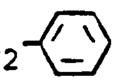 | $-OCH_3$ | orange |
| 18 | $-OCH_2CO_2CH_3$ | -H | orange |
| 19 | -O-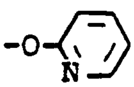 | -H | gelb |
| 20 | -O-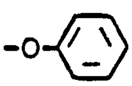 | -H | gelb |
| 21 | $-OCH_3$ | $-CH_3$ | orange |
| 22 | 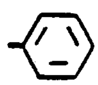 | -H | gelb |
| 23 | $-OCH_3$ | $-OCH_3$ | orange |
| 24 | -S-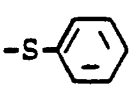 | -H | rot |
| 25 | -CH=CH-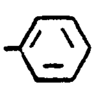 | -H | rot |
| 26 | $-N(CH_3)_2$ | -H | blau |
| 27 | $-N(C_2H_5)_2$ | -H | blau |
| 28 | $-N(CH_2CH_2CN)_2$ | -H | violett |

| Beispiel | $R_3$ | $R_2$ | saurer Entwicklungston |
|---|---|---|---|
| 29 | 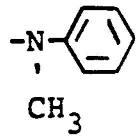 | -H | blau |
| 30 | $-N(CH_3)-CH_2CH_2Cl$ | -H | blau |
| 31 | $-N(CH_3)-CH_2CH_2CN$ | -H | blau |
| 32 | 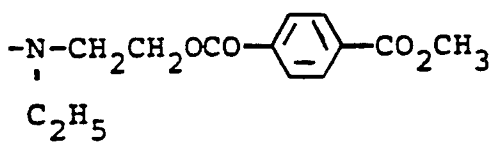 | -H | blaugrün |
| 33 | -Cl | -H | grünst. gelb |
| 34 | 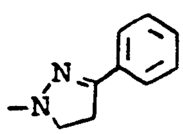 | -H | blaugrün |
| 35 | 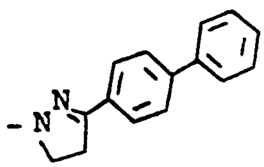 | -H | blaugrün |
| 36 | 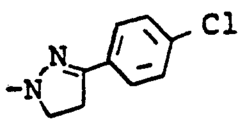 | -H | blaugrün |
| 37 | 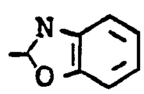 | | rot |
| 38 | 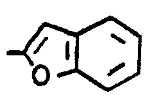 | -H | rot |
| 39 | $-CH_3$ | -H | gelb |

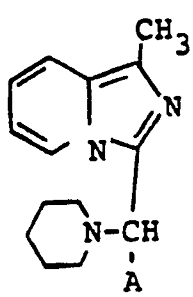

(b)

| Beispiel | A | Saurer Entwicklungston |
|---|---|---|
| 40 | 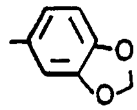 | |
| 41 | 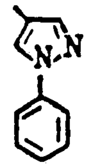 | gelb |
| 42 | 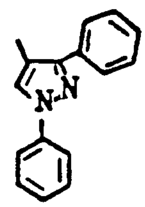 | orange |
| 43 | 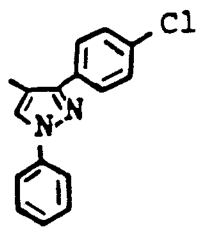 | orange |
| 44 | 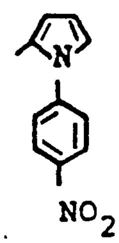 | rot |

Beispiele 45

Herstellung eines kohlefreien Durchschreibepapiers

a.) Herstellung der Mikrokapseldispersion

6,25 g der Leukoverbindung, hergestellt nach Beispiel 13, werden unter Rühren und Erwärmen auf 80°C in 161,1 g eines diisopropylierten Diphenyls gelöst und nach Abkühlen auf Raumtemperatur nacheinander 36,75 g Oxadiazintriondi-hexamethylendiisocyanat (NCO-Gehalt 21,0%) und 40,4 g Isohexadecan unter Rühren zugefügt.

Diese organische Lösung wird in 385 g einer 0,5 %igen, wäßrigen Lösung eines teilverseiften Polyvinylacetats (Verseifungsgrad 90%) gegeben und an einer Mischsirene bei 15 700 U/min eine Emulsion mit einer Tröpfchengröße von 6—8 µm hergestellt. Zu dieser Emulsion werden unter Rühren 6,1 g Diethylentriamin gelöst in 61,8 g Wasser, zugefügt. Die gebildete 35 %ige Mikrokapseldispersion wird 20 Minuten bei 35°C und nach Aufheizen 2 Stunden bei 60°C nachgerührt.

b.) Herstellung des Durchschreibepapiers

Die in a.) hergestellte Mikrokapseldispersion wird mit Wasser auf einen Kapselanteil von 15 Gew.-% verdünnt und mit einer 30 µm Drahtrakel auf ein Rohpapier (50 g/m$^2$) aufgestrichen.

Das Papier wird getrocknet und so ein Deckblatt eines kohlefreien Durchschreibepapiers hergestellt.

Eine Probe des Durchschreibepapiers wird mit der mit Mikrokapseln beschichteten Seite auf ein mit sauren Ton beschichtetes handelsübliches Nehmerpapier (Giroset CF''® der Fa. Feldmühle) gelegt und 3 weitere Papiere aufgelegt. Mit einer Schreibmaschine wird dieser Papierset mit dem Buchstaben "w" beschriftet. Auf dem Nehmerpapier wird ein echter Durchschlag des "w" in einem intensiven orangen Farbton sichtbar.

Beispiel 46

Es wird wie in Beispiel 45 a.) eine Mikrokapseldispersion hergestellt. Als Leukofarbstoff wird die in Beispiel 1 beschriebene Verbindung eingesetzt. Die Beschichtung und Beschriftung des Papiers erfolgt analog Beispiel 45 b.). Man erhält einen intensiven violetten Farbton.

Beispiel 47

Es wird wie in Beispiel 45 a.) eine Mikrokapseldispersion hergestellt. Als Leukofarbstoff wird die in Beispiel 16 beschriebene Verbindung eingesetzt. Die Beschichtung und Beschriftung des Papiers erfolgt analog Beispiel 45 b.). Man erhält einen intensiven orange-farbenen Ton.

Beispiel 48

Herstellung eines wärmeempfindlichen Aufzeichnungsblattes

In einer Kugelmühle werden 3,6 g eines Esterwachses mit einem Tropfpunkt von 79—85°C (Hoechst-Wachs E der Hoechst Ag), 41 g Kaolin, 18 g eines teilverseiften Polyvinylalkohols (Mowiol®26—88 der Hoechst Ag), 32 g (Bis-(4-hydroxyphenyl)-dimethylmethan und 500 g Wasser sorgfältig gemahlen, bis die Teilchengröße ca. 10 µm erreicht ist.

Mit Hilfe eines Ultra-Turrax-Mischers werden 6 g des Leukofarbstoffs, der nach Beispiel 27 hergestellt wurde, 3 g eines teilverseiften Polyvinylalkohols (Mowiol® 26—88 der Hoechst AG) und 60 g Wasser bei 20.000 U/Min. intensive vermischt, bis der Farbstoff in feiner Verteilung vorliegt. Der sich dabei bildende Schaum wird durch einige Tropfen Tributylphosphat zerstört

Die beiden Dispersionen werden miteinander vermischt und mit einer 30 µm Drahtrakel auf ein Rohpapier (50 g/m$^2$) gestrichen und vorsichtig getrocknet. Das Beschichtungsgewicht beträgt 5,0 g/m$^2$. Wird das beschichtete Papier mit einen erhitzten Nadel berührt, entsteht eine intensive blaugrüne Farbe.

**Patentansprüche**

1. Hetarylmethan-Leukofarbstoffe der Formel

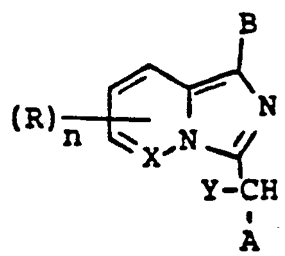

worin

R Halogen, Alkyl, Alkoxy, Aryl oder Aryloxy,

A einen aromatischen-carbocyclischen oder -heterocyclischen Rest,

B Wasserstoff, Halogen, Alkyl, Aryl, Alkylcarbonyl, Arylcarbonyl, Amino, Mono- oder Dialkylamino, Arylamino, Aralkylamino oder Acylamino,

X CH oder N,

Y 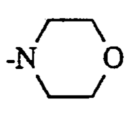 , 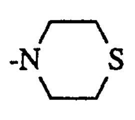 , 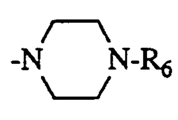 oder 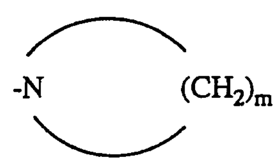

$R_6$ Wasserstoff oder Alkyl,

m 4—6 und

n 0,1—4 bedeuten und

worin die cyclischen und acyclischen Reste ihrerseits durch Halogen, Hydroxy, Alkoxy, Aryloxy, Aralkoxy, Hetaryloxy, Aryl, Heteraryl, Alkylmercapto, Arylmercapto, Aralkylmercapto, Cyan, Carbamoyl, Alkoxycarbonyl, Amino, das durch 1- oder 2-Alkyl-, Aryl- oder Aralkylgruppen substituiert sein kann, oder dessen Substituenten ringgeschlossen sein können, Alkenyloxy, Alkylcarbonyloxy oder Arylcarbonyloxy und die Ringe außerdem durch Alkyl, Aralkyl, Nitro, Alkenyl oder Arylvinyl substituiert sein können.

2. Hetarylmethan-Leukofarbstoffe gemäß Anspruch 1 der Formel

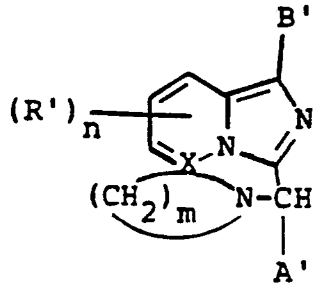

worin

R' Halogen, $C_1$—$C_5$-Alkyl oder $C_1$—$C_5$-Alkoxy,

A' Phenyl, Naphthyl, Pyrenyl, Anthracyl, Perylenyl, Biphenylyl, Thienyl, Pyrryl, Imidazolyl, Oxazolyl, Thiazolyl, Pyrazolyl, Pyridyl, Pyrimidyl, Chinolyl, 1,2,3,4-Tetrahydrochinolyl, Chinoxalyl, Indolyl, 1,2-Dihydrochinolyl oder Benzdioxolyl und

B' Wasserstoff, Halogen, $C_1$—$C_5$-Alkyl, Phenyl, $C_1$—$C_4$-Alkylcarbonyl, Benzoyl, Mono- oder Di-$C_1$—$C_5$-Alkylamino oder Phenylamino bedeuten, die Alkylreste und die cyclischen Reste durch Fluor, Chlor, Brom, Hydroxy, $C_1$—$C_8$-Alkoxy, Phenoxy, Benzyloxy, Pyridyloxy, Phenyl, Pyrazolinyl, Benzoxazolyl, Benzofuranyl, Triazolyl, $C_1$—$C_4$-Alkyl-, Phenyl- oder Benzylmercapto, Cyan, Carbamoyl, $C_1$—$C_4$-Alkoxycarbonyl, Amino, das seinerseits durch 1 oder 2 $C_1$—$C_4$-Alkyl-, Phenyl-, Benzyl- oder Phenethyl-Gruppen substituiert sein kann, $C_2$—$C_4$-Alkenyloxy, $C_1$—$C_4$-Alkylcarbonyloxy oder Benzoyloxy substituiert sein können, und die cyclischen Reste außerdem durch Benzyl, Nitro, $C_1$—$C_4$-Alkyl, $C_2$—$C_6$-Alkenyl oder Styryl substituiert sein können, und m und n die in Anspruch 1 angegebene Bedeutung haben.

3. Hetarylmethan-Leukofarbstoffe der Formel des Anspruchs 2, worin

B' = Methyl und

m = 5 bedeuten.

4. Hetarylmethan-Leukofarbstoffe der Formel des Anspruchs 2, worin

B' = $CH_3$,

m = 5,

n = 0 oder 1 und

X = CH sind.

5. Hetarylmethan-Leukofarbstoffe gemäß Anspruch 1 der Formel

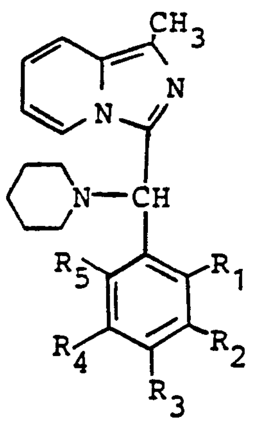

$R_1$ und $R_5$ für Wasserstoff, $C_1$—$C_4$-Alkyl, Phenyl, Benzyl, $C_1$—$C_4$-Alkoxy, $C_2$—$C_4$-Alkenyloxy, Phenoxy, $C_1$—$C_4$-Alkylcarbonyl, Benzoyl, Chlor oder Brom,

$R_2$ und $R_4$ für Wasserstoff, $C_1$—$C_4$-Alkyl, Phenyl, Benzyl, $C_1$—$C_4$-Alkoxy, Phenoxy, Chlor, Brom, Amino, das durch 1 oder 2 $C_1$—$C_4$-Alkyl-, Phenyl-, Benzyl- oder Phenethyl-Gruppen substituiert sein kann.

$R_3$ für Wasserstoff, $C_1$—$C_4$-Alkyl, Phenyl, Benzyl $C_1$—$C_8$-Alkoxy, Phenoxy, Pridyloxy, Benzyloxy, Phenyl-, Chlorphenyl- oder Biphenylyl-pyrazolinyl, Benzoxazolyl, Benzofuranyl, 1,2,3-Triazolyl, Phenylvinyl, Cyan, Chlor, Brom, $C_1$—$C_4$-Alkoxycarbonyl, $C_1$—$C_4$-Alkoxy- oder Phenoxycarbonyl-$C_1$—$C_4$-alkoxy, Nitro, Amino, das durch 1 oder 2 $C_1$—$C_4$-Alkyl-, Phenyl-, Benzyl- oder Phenethylgruppen substituiert sein kann, wobei die Reste am Stickstoff ihrerseits durch Chlor, Cyan oder Phenyl substituiert sein können, für $C_1$—$C_4$-Alkyl- oder Phenyl-mercapto, oder

$R_1$ und $R_2$ zusammen mit dem Benzolring an den sie gebunden sind, für Naphthyl oder Anthracyl, oder

$R_1$, $R_2$, $R_4$ und $R_5$ zusammen mit dem Benzolring, an dem sie gebunden sind für gegebenenfalls durch Chlor substituiertes Anthracyl, oder

$R_1$, $R_2$ und $R_3$ zusammen mit dem Benzolring, an den sie gebunden sind, für Pyrenyl, oder

$R_2$ und $R_3$ zusammen mit dem Benzolring, an den sie gebunden sind, für Benzdioxol stehen.

6. Hetarylmethan-Leukofarbstoffe gemäß Anspruch 1 der Formel

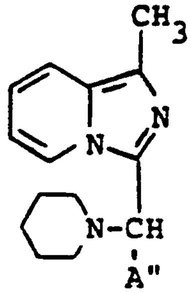

worin

A'' für die Reste

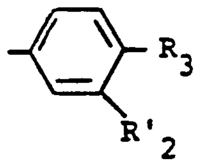
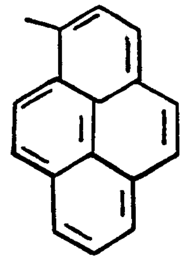
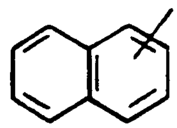
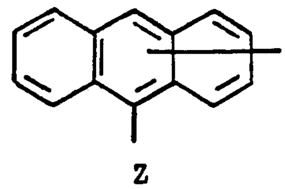

oder

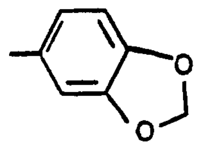

$R_2'$ für Wasserstoff, Methoxy, Ethoxy, Methyl oder Ethyl und

Z für Wasserstoff oder Chlor stehen, und

$R_3$ die in Anspruch 5 angegebene Bedeutung hat.

7. Verfahren zur Herstellung der Verbindungen des Anspruchs 1, dadurch gekennzeichnet, daß man Verbindungen der Formel

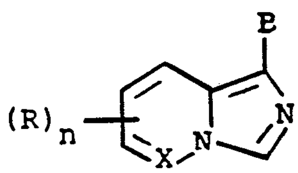

oder

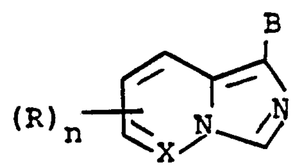

. 2 HCl

worin

X, R, n und B die in Anspruch 1 angegebene Bedeutung haben, mit Aldehyden der Formel

O=CH—A

und mit Basen der Formel

YH

wobei A und Y die in Anspruch 1 angegebene Bedeutung besitzen, umsetzt.

8. Aufzeichnungsmaterial, das als Farbbildner eine Verbindung des Anspruchs 1 enthält.

9. Verwendung der Verbindungen des Anspruchs 1 als Farbbildner in druckkopierfähigen und thermoreaktiven Aufzeichungsmaterialien.

**Revendications**

1. Leucocolorants d'hétéroarylméthanes de formule

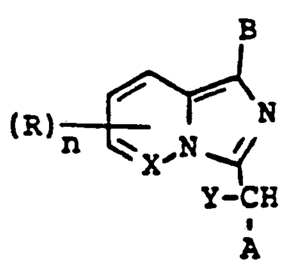

dans laquelle

R représente un atome d'halogène ou un groupe alkyle, alcoxy, aryle ou aryloxy,

A représente un reste aromatique carboxylique ou hétérocyclique,

B représente un atome d'hydrogène ou d'halogène ou un groupe alkyle, aryle, alkylcarbonyle, arylcarbonyle, amino, mono ou dialkylamino, arylamino, arylalkylamino ou acylamino,

X représente CH ou N,

Y représente 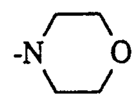 , 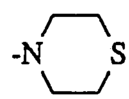 , 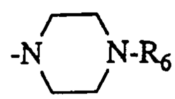 ou 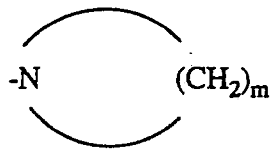

$R_6$ représente un atome d'hydrogène ou un groupe alkyle,

m représente un nombre de 4 à 6 et

n représente un nombre de 0,1 à 4 et dans laquelle les restes cycliques et acycliques peuvent à leur tour être substitués par halogène, hydroxy, alcoxy, aryloxy, arylalcoxy, hétéroaryloxy, aryle, hétéroaryle, alkylmercapto, arylmercapto, arylalkylmercapto, cyano, carbamoyle, alcoxycarbonyle, amino qui peut être substitué par un ou deux groups alkyles, aryles ou arylalkyles, ou dont les substituants peuvent former un cycle, alcényloxy, alkylcarbonyloxy ou arylcarbonyloxy et les noyaux peuvent en outre les être substitués par alkyle, arylalkyle, nitro, alcényle ou arylvinyle.

2. Leucocolorants d'hétéroarylméthanes selon la revendication 1, de formule

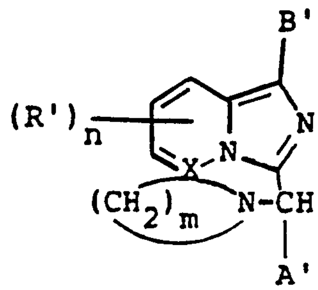

dans laquelle

R' représente un atome d'halogène ou un groupe alkyle en $C_1$—$C_5$ ou alcoxy en $C_1$—$C_5$,

A' représente un groupe phényle, naphtyle, pyrényle, anthracyle, pérylényle, biphénylyle, thiényle, pyrryle, imidazolyle, oxazolyle, thiazolyle, pyrazolyle, pyridyle, pyrimidyle, quinoléyle, 1,2,3,4-tétrahydroquinoléyle, quinoxalyle, indolyle, 1,2-dihydroquinoléyle ou benzodioxolyle, et

B' représente un atome d'hydrogène ou d'halogène ou un groupe alkyle en $C_1$—$C_5$, phényle, (alkyl en $C_1$—$C_4$)carbonyle, benzoyle, mono ou di(alkyl en $C_1$—$C_5$)amino ou phénylamino,

les restes alkyles et les restes cycliques peuvent être substitués par fluoro, chloro, bromo, hydroxy, alcoxy en $C_1$—$C_8$, phénoxy, benzyloxy, pyridyloxy, phényle, pyrazolinyle, benzoxazolyle, benzofurannyle, triazolyle, alkylmercapto en $C_1$—$C_4$, phénylmercapto ou benzylmercapto, cyano, carbamoyle, (alcoxy en $C_1$—$C_4$)carbonyle, amino qui peut à son tour être substitué par un ou deux groupes alkyles en $C_1$—$C_5$, phényles, benzyles ou phénéthyles, alcényloxy en $C_2$—$C_4$, (alkyl en $C_1$—$C_4$)carbonyloxy ou benzoyloxy et les restes cycliques peuvent en outre être substitués par benzyle, nitro, alkyle en $C_1$—$C_4$, alcényle en $C_2$—$C_6$ ou styryle et m et n ont la signification indiquée à la revendication 1.

3. Leucocolorants d'hétéroarylméthanes de formule selon la revendication 2, dans laquelle

B' représente un groupe méthyle et

m est égal à 5.

4. Leucocolorants d'hétéroarylméthanes de formule selon la revendication 2, dans laquelle

B' est un groupe $CH_3$,

m est égal à 5,

n est égal à 0 ou 1 et

X est un groupe CH.

5. Leucocolorants d'hétéroarylméthanes selon la revendication 1, de formule

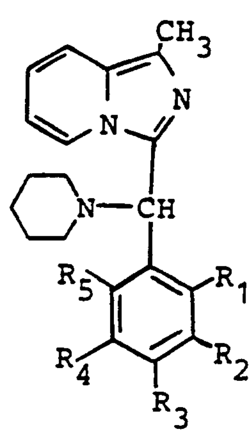

dans laquelle

$R_1$ et $R_5$ représentent un atome d'hydrogène, de chlore ou de brome ou un groupe alkyle en $C_1$—$C_4$, phényle, benzyle, alcoxy en $C_1$—$C_4$, alcényloxy en $C_2$—$C_4$, phénoxy, (alkyl en $C_1$—$C_4$)carbonyle ou benzoyle,

$R_2$ et $R_4$ représentent l'hydrogène, le chlore, le brome ou un groupe alkyle en $C_1$—$C_4$, phényle, benzyle, alcoxy en $C_1$—$C_4$, phénoxy ou amino qui peut être substitué par un ou deux groupes alkyles en $C_1$—$C_4$, phényles, benzyles ou phénéthyles.

$R_3$ représente l'hydrogène, le chlore, le brome ou un groupe alkyle en $C_1$—$C_4$, phényle, benzyle, alcoxy en $C_1$—$C_8$, phénoxy, pyridyloxy, benzyloxy, phényl-, chlorophényl- ou biphényl-pyrazolinyle, benzoxazolyle, benzofurannyle, 1,2,3-triazolyle, phénylvinyle, cyano, (alcoxy en $C_1$—$C_4$)carbonyle, (alcoxy en $C_1$—$C_4$)- ou phénoxycarbonylalcoxy en $C_1$—$C_4$, nitro, amino qui peut être substitué par un ou deux groupes alkyles en $C_1$—$C_4$, phényles, benzyles ou phénéthyles, les restes à l'azote pouvant à leur tour être substitués par chloro, cyano ou phényle, ou alkylmercapto en $C_1$—$C_4$ ou phénylmercapto, ou bien

$R_1$ et $R_2$, pris ensemble avec le noyau benzénique auquel ils sont liés représentent un reste naphtyle ou anthracyle, ou bien $R_1$, $R_2$, $R_4$ et $R_5$, pris ensemble avec le noyau benzénique auquel ils sont liés, représentent un reste anthracyle éventuellement chloré, ou bien

$R_1$, $R_2$ et $R_3$, pris ensemble avec le noyau benzénique auquel ils sont liés, représentent un reste pyrényle, ou bien

$R_2$ et $R_3$, pris ensemble avec le noyau benzénique auquel ils sont liés, représentent un reste benzodioxole.

6. Leucocolorants d'hétéroarylméthanes selon la revendication 1, de formule

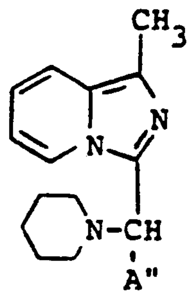

dans laquelle

A'' représente un reste

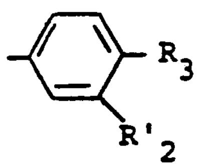 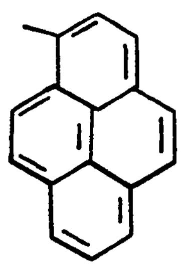 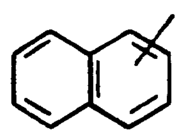 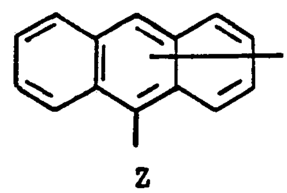

ou

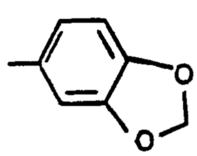

$R'_2$ représente l'hydrogène ou un groupe méthoxy, éthoxy, méthyle ou éthyle, et

Z représente l'hydrogène ou le chlore et

$R_3$ a la signification indiquée à la revendication 5.

7. Procédé pour la fabrication des composés selon la revendication 1, caractérisé en ce que l'on fait réagir des composés de formule

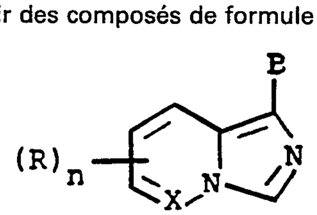 ou 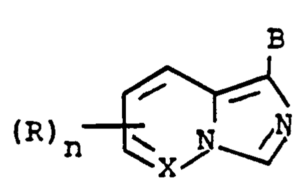 . 2 HCl

dans laquelle

X, R, n et B ont la signification indiquée dans la revendication 1, avec des aldéhydes de formule

O=CH—A

et avec des bases de formule

YH

où A et Y ont la signification indiquée à la revendication 1.

8. Matériau de reproduction, qui contient comme composé chromogène un composé selon la revendication 1.

9. Utilisation des composés selon la revendication 1 comme chromogènes dans les matériaux de reproduction sensibles à la pression et thermoréactifs.

**Claims**

1. Hetarylmethane leuco dyestuffs of the formula

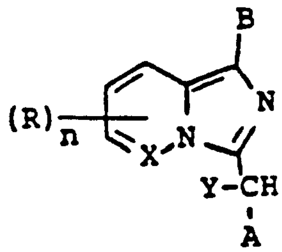

wherein

R denotes halogen, alkyl, alkoxy, aryl or aryloxy,

A denotes an aromatic-carbocyclic or -heterocyclic radical,

B denotes hydrogen, halogen, alkyl, aryl, alkylcarbonyl, arylcarbonyl, amino, monoalkylamino, dialkylamino, arylamino, aralkylamino or acylamino,

X denotes CH or N,

Y denotes 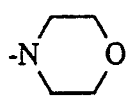, 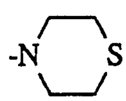, 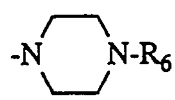 or 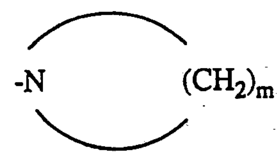

$R^6$ denotes hydrogen or alkyl,

m denotes 4—6 and

n denotes 0 and 1—4 and wherein the cyclic and acyclic radicals in turn can be substituted by halogen, hydroxyl, alkoxy, aryloxy, aralkoxy, hetaryloxy, aryl, heteraryl, alkylmercapto, arylmercapto, aralkylmercapto, cyano, carbamoyl, alkoxycarbonyl, amino which can be substituted by 1- or 2-alkyl, aryl or aralkyl groups or whose substituents can be cyclized, alkenyloxy, alkylcarbonyloxy or arylcarbonyloxy and the rings can additionally be substituted by alkyl, aralkyl, nitro, alkenyl or arylvinyl.

2. Hetarylmethane leuco dyestuffs according to Claim 1 of the formula

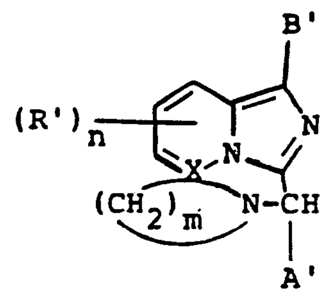

wherein

R′ denotes halogen, $C_1$—$C_5$-alkyl or $C_1$—$C_5$-alkoxy,

A′ denotes phenyl, naphthyl, pyrenyl, anthracyl, perlenyl, biphenylyl, thienyl, pyrryl, imidazolyl, oxazolyl, thiazolyl, pyrazolyl, pyridyl, pyrimidyl, quinolyl, 1,2,3,4-tetrahydroquinolyl, quinoxalyl, indolyl, 1,2-dihydroquinolyl or benzodioxolyl and

B′ denotes hydrogen, halogen, $C_1$—$C_5$-alkyl, phenyl, $C_1$—$C_4$-alkylcarbonyl, benzoyl, mono- or di-$C_1$—$C_5$-alkylamino or phenylamino, the alkyl radicals and the cyclic radicals can be substituted by fluorine, chlorine, bromine, hydroxyl, $C_1$—$C_8$-alkoxy, phenoxy, benzyloxy, pyridyloxy, phenyl, pyrazolinyl, benzoxazolyl, benzofuranyl, triazolyl, $C_1$—$C_4$-alkylmercapto, phenylmercapto, benzylmercapto, cyano,

carbamoyl, $C_1$—$C_4$-alkoxycarbonyl, amino, which in turn can be substituted by 1 or 2 $C_1$—$C_4$-alkyl, phenyl, benzyl or phenethyl groups, $C_2$—$C_4$-alkenyloxy, $C_1$—$C_4$-alkylcarbonyloxy or benzoyloxy, and the cyclic radicals can additionally be substituted by benzyl, nitro, $C_1$—$C_4$-alkyl, $C_2$—$C_6$-alkenyl or styryl, and m and n are as defined in Claim 1.

3. Hetarylmethane leuco dyestuffs of the formula of Claim 2 wherein
B' = methyl and
m = 5.

4. Hetarylmethane leuco dyestuffs of the formula of Claim 2 wherein
B' = $CH_3$
m = 5,
n = 0 or 1 and
X = CH.

5. Hetarylmethane leuco dyestuffs according to Claim 1 of the formula

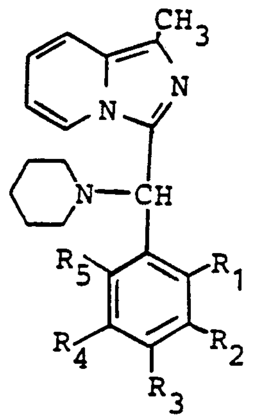

$R_1$ and $R_5$ stand for hydrogen, $C_1$—$C_4$-alkyl, phenyl, benzyl, $C_1$—$C_4$-alkoxy, $C_2$—$C_4$-alkenyloxy, phenoxy, $C_1$—$C_4$-alkylcarbonyl, benzoyl, chlorine or bromine, $R_2$ and $R_4$ stand for hydrogen, $C_1$—$C_4$-alkyl, phenyl, benzyl, $C_1$—$C_4$-alkoxy, phenoxy, chlorine, bromine or amino which can be substituted by 1 or 2 $C_1$—$C_4$-alkyl, phenyl, benzyl or phenethyl groups, $R_3$ stands for hydrogen, $C_1$—$C_4$-alkyl, phenyl, benzyl, $C_1$—$C_8$-alkoxy, phenoxy, pyridyloxy, benzyloxy, phenylpyrazolinyl, chlorophenylpyrazolinyl, biphenylylpyrazolinyl, benzoxazolyl, benzofuranyl, 1,2,3-triazolyl, phenylvinyl, cyano, chlorine, bromine, $C_1$—$C_4$-alkoxycarbonyl, $C_1$—$C_4$-alkoxycarbonyl- or phenoxycarbonyl-$C_1$—$C_4$-alkoxy, nitro, amino which can be substituted by 1 or 2 $C_1$—$C_4$-alkyl, phenyl, benzyl or phenethyl groups and the radicals on nitrogen can in turn be substituted by chlorine, cyano or phenyl, or stands for $C_1$—$C_4$-alkylmercapto or phenylmercapto, or $R_1$ and $R_2$, together with the benzene ring to which they are bonded, stand for naphthyl or anthracyl, or

$R_1$, $R_2$, $R_4$ and $R_5$, together with the benzene ring to which they are bonded, stand for optionally chlorine-substituted anthracyl, or

$R_1$, $R_2$ and $R_3$, together with the benzene ring to which they are bonded, stand for pyrenyl, or $R_2$ and $R_3$, together with the benzene ring to which they are bonded, stand for benzodioxole.

6. Hetarylmethane leuco dyestuffs according to Claim 1 of the formula

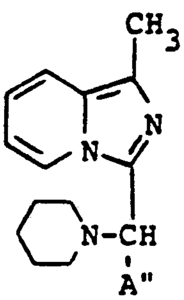

wherein

A'' stands for the radicals

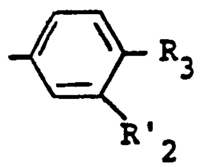
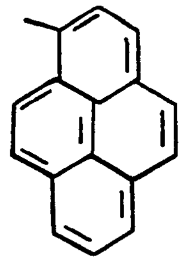
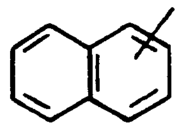
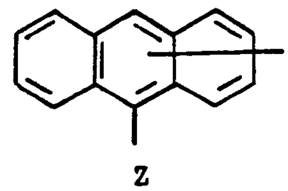

or

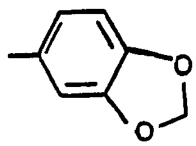

$R'_2$ stands for hydrogen, methoxy, ethoxy, methyl or ethyl,
Z stands for hydrogen or chlorine, and
$R_3$ is as defined in Claim 5.

7. Process for preparing the compounds of Claim 1, characterized in that compounds of the formula

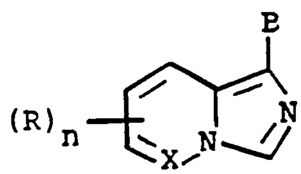

or

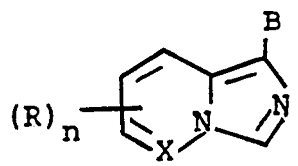 . 2 HCl

wherein
X, R, n and B are as defined in Claim 1, are reacted with aldehydes of the formula

O=CH—A

and with bases of the formula

YH

where
A and Y are as defined in Claim 1.

8. Recording material which contains a compound of Claim 1 as colour former.

9. Use of the compounds of Claim 1 as colour formers in pressure-copyable and thermoreactive recording materials.